# EUROPEAN PATENT SPECIFICATION

(11) **EP 4 548 542 B1**
(45) Date of publication and mention of the grant of the patent: **04.11.2026**
(21) Application number: 23748865.5
(22) Date of filing: 28.06.2023
(51) Int. Cl.: H04L 9/40

(54) **DISTRIBUTED QUORUM AUTHORIZATION ENFORCEMENT THROUGH AN API GATEWAY**
VERTEILTE QUORUM-AUTORISIERUNGSDURCHSETZUNG DURCH EIN API-GATEWAY
APPLICATION DE L'AUTORISATION DU QUORUM DISTRIBUÉ AU TRAVERS D'UNE PASSERELLE API

(30) Priority: 01.07.2022 US 202217855890
(43) Date of publication of application: 07.05.2025
(73) Proprietor: THALES DIS CPL USA, INC., Belcamp, MD 21017 (US)
(72) Inventor: TEWARI, Devesh, Kumar, Austin, TX 78759 (US); SINHA, Amit, Austin, TX 78759 (US)
(74) Representative: Grevin, Emmanuel
(86) International application number: PCT/US2023/026391
(87) International publication number: WO 2024/006313

(56) References cited:
- EP-A1- 3 429 156
- US-A1- 2022 164 790
- US-B1- 10 523 716

## Description

### TECHNICAL FIELD

The present invention relates generally to management and configuration of network devices, and more particularly, to Application Programming Interfaces (API) related to authorization services for configuring a Hardware Security Module (HSM) cryptographic unit.

### BACKGROUND

A Hardware Security Module (HSM) is a dedicated crypto processing unit that is specifically designed for the hardware protection of the crypto key lifecycle. Hardware security modules act as trust anchors that protect the cryptographic infrastructure of some of the most security-conscious organizations in the world by securely managing, processing, and storing cryptographic keys inside a hardened, tamper-resistant device. Enterprises use hardware security modules to protect transactions, identities, and applications, as HSMs excel at securing cryptographic keys and provisioning encryption, decryption, authentication, and digital signing services for a wide range of applications.

HSM protect encryption keys and are used by applications in on-premise, virtual, and cloud environments. They are hardware appliances that can be stored in racks in a data center and associated with cryptographic networking components. They are deployed and securely configured remotely in any of these environments. Because they are secure and operate on sensitive data only authorized applications are allowed access. Access to a HSM is usually controlled via a management interface. Authentication is the process of verifying a user's identity and their ability to access a requested account on the HSM. Authorization establishes which permissions the user has within the HSM.

In HSM products quorum (m-of-n) authorization is generally tied with the authentication session requiring all the authorized user parties to be available at same location to authenticate in same session before any operations requiring quorum can be performed. This form of HSM management is usually done through a user interface (UI) or console. PCI-HSM mandates any sensitive configuration change must be approved by at least two administrators. One limitation to this approach is that all users must be present at same location; thus, it cannot be performed in a distributed manner. Secondly, it does not provide for maintaining a state within an established session. Moreover, there is a need to provide a distributed solution that is more manageable that the current approach.

Shared Secret schemes such as the one proposed by Shamir A., ("How to Share a Secret," Programming Techniques, Communication of the ACM, vol. 22, No. 11, Nov. 1979) have been proposed as a solution for resolving the distributed key management problem. Such a scheme is used to distribute the secret to individual authorized users to provide the information to complete the secret and which can then be used for performing operations using that secret. The mathematical construct has been designed in such a way that it needs all the shares to be present for reconstructing the secret. This has been traditionally used by HSM's(Hardware Security Module) and other systems sharing secrets. With the progress of time, additional mandatory procedures (authorization and/or authentication of shareholders) were introduced for each shareholder (holder of a share/fragment) of the secret. But all these procedures required the presence of each shareholder at the location where the secret was to be punched in.

However, the shared secret key approach presents at least two risks: 1) there is no control of the shareholders once they have entered the secret and other shareholder going in to enter its own part of the secret. This leads to a scenario where the last shareholder of the share of the secret has access to the entire system and can engage the systems and resources without oversight at least for a time which become aware of only afterwards, and 2) there is no control over specific resources, and this may lead to complete unintentional or intentional sabotage of the system or another layer of secrets for each resource which would require additional shareholders and the presence of all these shareholders to the premise requiring one operational change to lead to a downtime or waste of resources for even the miniscule operations.

The combination of cloud based systems with security managed HSMs presents a complex issue from a cloud deployment perspective; namely, both must be managed and accessed securely, and each requires its own secure operational controls. Moreover, the HSMs are meant to manage the security and encryption throughout the network, including the cloud deployment and management control itself. Addressing this problem requires solving two inefficiencies in the earlier on-premise solution as well as stricter control over every configurational aspect. The two inefficiencies are: 1) remotely working in coherence with access only to a shared secret for any operational requirement, and 2) control over every resource defined by the system as operational configuration by every shareholder. Additionally, in earlier shared secret attempts, there was no scope for enforcing the order or constraints over some resource as well as allowing partial operations using authorization from only a subset of users.

A need therefore exists in a cloud based environment for overcoming these inefficiencies and improving the process by which HSM configurations are managed.

US 10 523 716 B1 discloses a system for managing immutable cloud service provider accounts, where configuration changes require administrator approval via a quorum-based workflow.

### SUMMARY

In a first embodiment, a computer implemented method for distributed quorum authentication enforcement of a Hardware Security Module (HSM) device through an API gateway according to claim 1 is provided.

In a second embodiment a Hardware Security Module (HSM) device implementing a distributed quorum authentication enforcement through a API gateway is provided.

In a quorum creation event stage, the quorum request is created when an operation (use, modify, view, etc.) on the resource is attempted that requires quorum authorization. A quorum policy establishes if a quorum is required to access the resource. The quorum request is generated in accordance with the quorum policy and stored in a database, thereby attaching the quorum request to the resource. A quorum identifier (ID) is generated to associate to the resource, and is included in the quorum requst. Responsive to the creating of the quorum request, administrators are each informed and required to each provide an approval status for the quorum request via the API gateway, which will grant the user privileges to access the resource.

In a quorum data retrievel event stage any other user who has access to quorum request can get information about the quorum request by requesting it from HSM via the API gateway. If includes checking whether the user or an administrator is allowed to access the quorum id, and f so, associating the quorum id with the quorum request. Details of the quorum request are then provided to the use or administrator via the API.

In a quorum approval event stage, responsive to receiving the approval status from the administrators via the API, administrators are validated to ensure they are authorized to approve the quorum request. If validated, a voting count on the quorum request is updated in the database. The user is then informed via the API gateway the approval status. Access to the resource is enforced in accordance with both the quorum policy and updated quorum request. In its basic form, the quorum request includes the quorum ID, an approval threshold, a voting count, a quorum expiry, and an approval status. It may include other information related to the object and the quorum process.

In a quorum application event stage, a check is made to determine whether the administrator identified in the quorum request is allowed to access the quorum id. If so, the quorum id is associated with the quorum request, and details about the quorum request are retrieved. If an approval threshold is met in view of the voting count, and occurred within a quorum expiry period, the approval status is updated to indicate quorum is approved for the resource. The approval status is committed to the database for the quorum request.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1A** depicts exemplary components of a Hardware Server Module (HSM) in accordance with one embodiment;
**FIG. 1B** depicts a communication environment for deployment of quorum authentication services in accordance with one embodiment;
**FIG. 2** presents a sequence diagram for generic authentication of users configuring an HSM in accordance with one embodiment;
**FIG. 3A** presents a first sequence diagran for method steps for quorum creation and quorum data retrieval as a first part of quorum authentication services in accordance with one embodiment;
**FIG. 3B** presents a second sequence diagran for method steps for quorum approval and quorum appplication as a second part of quorum authentication services in accordance with one embodiment;
**FIG. 4** illustrates an Applications Programming Inteface (API) for quorum authentication services in accordance with one embodiment;
**FIG. 5** depicts a flowchart for a method of quorum authentication services in accordance in accordance with one embodiment; and
**FIG. 6** depicts an exemplary diagrammatic representation of a machine and hardware platform suitable for use to perform the methods in accordance with an embodiment.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In the context of the present description, an HSM is a hardened, tamper-resistant hardware device that secure cryptographic processes by generating, protecting, and managing keys used for encrypting and decrypting data and creating digital signatures and certificates. A "payments HSM" is an HSM for use in financial payments industry. A "hosted HSM" is a payments HSM physically hosted by a computing service provider, for example, within a data center. A "cloud HSM" provides same functionality as on-premises HSMs with the benefits of a cloud service deployment, without the need to host and maintain on premises appliances. A HSM deployment can provide for Software as a Service (SaaS), Platform as a Service (PaaS), or Infrastructure as a Service (laaS) models.

The "configuring" of a HSM refers to the process/procedure of setting up or changing the parameters of the HSM for its operational or administrative use. It can also refer to the configuring of resources/services offered by the HSM (e.g., network, security, users, data protection, etc.) and associated objects (e.g. keys, data, devices, drivers, etc.). Configuration may be further defined by access rights, permissions of policies and for different users or groups (e.g., administrators, officers, users, etc. The "enforcement" of a configuration refers to confirming to adherence of a quorum policy, for example, to confirm a user has permissions to access, view, update or otherwise interact with a resource, service or object.

The "provisioning" of a HSM refers to the process/procedure of managing the allocation of the hosted HSM allocation to a particular end-user. The "commissioning" is the process of changing from using the pre-placed HSM manufacturer's trust to the customer's trust by the end-user. The "warranting' is the process of establishing manufacturer's trust in the HSM (installed in the factory). A third party "service provider" is a vendor providing the HSM, or component thereof, a service associated with the HSM, or selling the HSM as a service (including microservices), and a "customer" is an end-user of the hosted HSM's payment services.

The acronym "IP" designates any protocol of the Internet protocol suite for operation of network applications, such as, for instance:
- in the Application layer of the OSI model: the Hypertext Transfer Protocol (HTTP) or its secure version HTTPS, DHCP, SMTP, TLS/SSL, etc.
- in the Transport layer of the OSI model which can be used to transmit data over the Internet or any Local Area Network (LAN) : the Transmission Control Protocol (TCP), the User Datagram Protocol (UDP) needing only one port for full-duplex, bidirectional traffic, the Stream Control Transmission Protocol (SCTP) and the Datagram Congestion Control Protocol (DCCP) which also use port numbers that match the services of the corresponding TCP or UDP implementation, if they exist;
- in the Internet (Network) layer: Internet Protocol (IPv4 or IPv6), ICMP, IGMP, etc.

The term "Microservices" encompasses a software architectural design and approach for building a distributed application using containers. Microservices is a specialization of an implementation approach for service-oriented architectures (SOA) used to build flexible, independently deployable software systems.[5] The microservices approach is a first realization of SOA that followed the introduction of DevOps and is becoming more popular for building continuously deployed systems. Whereas, microservice is an approach to building an application that breaks its functionality into modular components, APIs are part of an application that communicates with other applications.

An "Application Programming Interface" (API) is a program that allows two systems to communicate with one another. An API essentially provides the language and contract for how two systems interact. APIs work using 'requests' and 'responses.' When an API requests information from a web application or web server, it will receive a response. The place that APIs send requests and where the resource lives, is called an endpoint. An endpoint is one end of a communication channel. When an API interacts with another system, the touchpoints of this communication are considered endpoints. For APIs, an endpoint can include a URL of a server or service. Each endpoint is the location from which APIs can access the resources they need to carry out their function.

In described embodiments, there will be considered the non-limiting example of a cloud-based (web-based) payment system architecture, wherein a hosted HSM is housed in a data center and is remotely accessible/configurable by end-users, or operators, through the Internet as a communication network. An operator is a user with administrative privileges for configuring the HSM 10, for example, a system administrator having their own password and a separate device card (e.g. Java Card) for providing additional credentials. Here, a user can also refer to an operator with special privileges above a normal user. It will become apparent to the one with ordinary skills in the art, however, that other public and/or private communication, including for instance a Local Area Network (LAN), can be similarly contemplated.

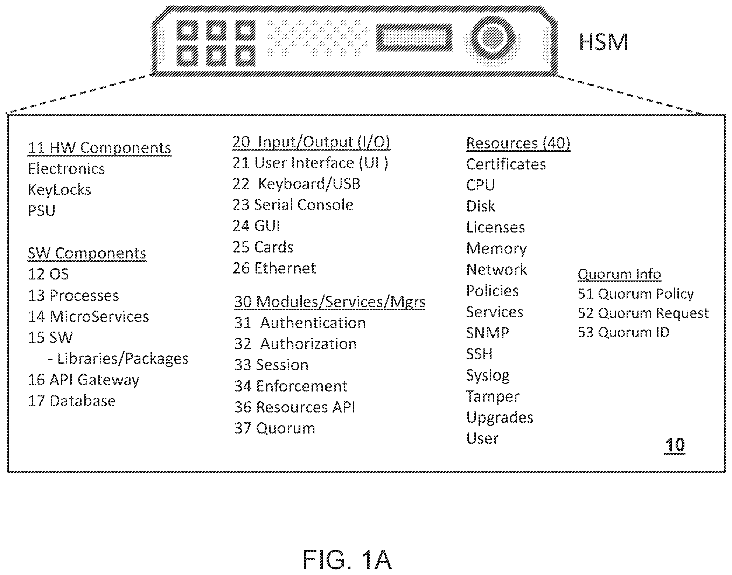

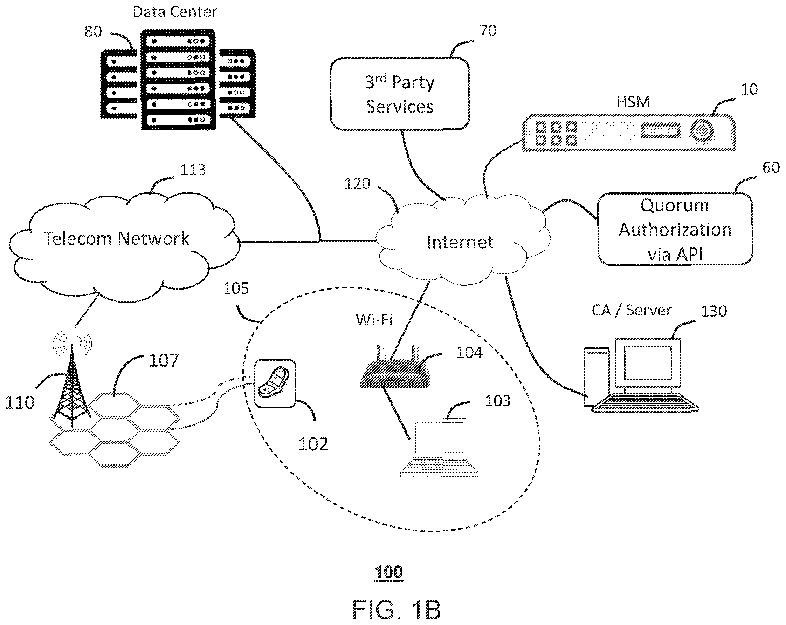

**FIG. 1** depicts exemplary components of a Hardware Server Module (HSM) 10. The HSM **10** is a physical computing device that, among other capabilities, safeguards and manages digital keys, performs encryption and decryption functions for digital signatures, and provides for strong authentication and other cryptographic functions. It may exist in the form of a PCI plug-in card or an external hardware rack unit that attaches directly to a computer or network server within a data center. As a security hardened unit, the HSM **10** records tamper evidence, such as visible signs of tampering or logging and alerting, and provides for tamper responsiveness such as deleting keys upon tamper detection. The HSM **10** contains one or more secure cryptoprocessor and sensor chips to prevent tampering and bus probing, or a combination of chips in a module that is protected by the tamper evident, tamper resistant, or tamper responsive packaging.

Briefly, a payment HSM is a hardened, tamper-resistant hardware device that is used primarily by the retail finance or banking industry to provide high levels of protection for cryptographic keys and customer PINs used during the issuance of magnetic stripe and EMV chip cards (and their mobile application equivalents) and the subsequent processing of credit and debit card payment transactions. Payment HSMs normally provide native cryptographic support for all the major card scheme payment applications and undergo rigorous independent hardware certification. Payment HSMs and management tools provide flexible, efficient transaction security for retail payment processing environments, internet payment applications, and web-based PIN delivery.

The main role of a payment HSM is to protect cryptographic keys and other security sensitive data in a highly secure manner, such that the integrity of the overall payment process is maintained, and provide audit and system logs of HSM usage. To that end, HSMs offer the highest level of security by always storing cryptographic keys in intrusion-resistant hardware and providing up to date reporting of its operation. Commonly, HSMs are housed in a data center of a computing resource provider or any similar securely hosting area. More specifically, any HSM hosted in the data center may be attached directly to a server, for instance in a rack, and can be accessed on-site by an operator e.g., through console attach to the HSM via a universal serial bus (USB) connection implementing a USB-C interface, for example.

Operational use of the HSM **10** is primarily by way of the components shown in the figure, but understandably, many more components, electronics, and modules are present in a typical HSM. Those components shown are those mostly related, and suitable for use, for implementing the foregoing inventive methods. Hardware (HW) components **11** represent general electronics for operating the HSM (e.g., processors, central processing units, security, sensors, memory, network devices, ports, power supply units (PSU), wires, keylocks, etc.). The Hardware also contains memory to run operating system and input-output (I/O) devices for interaction. It comprises different types of processors, such as a crypto processor, security processor, general processing unit (GPU), central processing unit (CPU) to assist in protection, management of keys and hardware acceleration with the operating system. The keys, or any other data, can be stored in the database for persistence. The hardware architecture is designed to protect and manage digital keys, and can perform encryption, decryption, digital signature generation and verification.

The Operating System (OS) **12** is a software component that executes on top of hardware, for example, the general processor, to manage hardware resources and peripherals, run HSM jobs/processes, and help in execution of other processes **13.** Ubuntu is an exemplary OS that provides an embedded Linux distribution with libraries and packages. Ubuntu (GNU / Linux) is a multitasking Operating System capable of executing several processes (tasks) simultaneously. Different processes **13** for performing the HSM functions (data protection, key management, pin translations, etc.) are scheduled by the operating system **12.** A thread is the basic unit to which the operating system allocates processor time. A process **13** is an instance of a computer program that is executed by one or many threads in the GPU or CPU. One or more threads run in the context of the process. A thread can execute any part of the process code, including parts currently being executed by another thread.

Certain HSM functionality and capabilities are configured as micro-services. Micro-services are independent and lightweight processes designed to perform specific tasks. They are typically handled and managed within the HSM by way of the OS **12.** Micro-services **14** can communicate with each other and with external systems over specialized protocols and application programming interface (API) **16.** Micro service are built using software libraries/packages **15,** which are a self-contained set of independent and interchangeable software component that implement a specific functionality. Micro-services **14** and Processes **13** are built using these software libraries/packages **15.** By way of these microservices, applications can implement a third-party Microservice provider's generic API to a service to deliver Payment HSM capabilities. In this manner, for example, a 3^{rd} party customer by way of APIs can partition their workload to optimized payment HSMs for performing specific tasks (e.g. ECC/RSA key gen, PIN translations, etc.) according to their microservice model.

The Applications Programming Interface (API) gatewat **16** provides a connection between computers or between computer programs/applications, and/or between computers and people. It is a type of software interface, offering a service to other pieces of software. The API provides a communication channel between HSM components, internal processes **13** and/or micro services **14.** These APIs are exposed on top of input/output (I/O) **20** interfaces. External systems and/or people communicate with HSM via the I/O interfaces **20,** such as user interface (UI) **21.** The HSM can also communicate with external systems through hardware IO interfaces, such as the keyboard **22,** serial port **23,** Ethernet, optical ports, USB ports, etc. External systems (host computers in a data center) can also talk to HSM software interface via APIs exposed on top of individual hardware interfaces (e.g., network device driver, disk/memory management, etc.).

The HSM **10** includes a local console **23** that is serial connected over e.g., a USB-C interface. The serial interface can be used by operations personnel, namely operators, referred to as DCOps (standing for Data Center Operations), who have physical access to the HSM for manually issuing commands to the HSM. Such USB-C interface is used, according to the standing state of the art, for all configuration throughout the HSM service, including initial configuration and cumbersome provisioning processes. The HSM also includes managerial Graphical User Interface (GUI) **24** that over an Ethernet **26** connection allow for remote configuration of the HSM. Also, the I/O **20** can be used to configure network settings, SSH certificates, upgrades, licenses and devices (e.g. CPU, Disk, memory,etc.). Operator (Java) cards **25** also provide a means for provisioning and securing the HSM using key shares and key splits.

The HSM also includes services **30** by way of modules, processes and service managers. Some services may be internal to the HSM, and others may be selectively exposed via the API gateway **16** to external entities or services. Examples of services **30** include authentication **31,** authorization **32,** session manager **33,** enforcement **34,** resource API manager **36,** and quorum manager **37.** Accordingly, service managers can be invoked/managed/configured remotely (external) via their APIs, for example, from a web based GUI (e.g. payShield Manager) via Internet connection over Ethernet to the HSM **10.**

The HSM also includes (internal) resources **40** which can be externally configured via the normal I/O interfaces **20,** and also, for some, (internally and externally) via any of the module/service managers **30** and their respective APIs. Examples of HSM resources include, but are not limited to, certificates, licenses, policies, device management, services, upgrades and so on. Each resource **40** has a respective API for software modules, processes or microservices to interact with the respective resource. The HSM offers access and services to each resource **40** via the resources API **36.** Aside from payments HSM related tasks (e.g. encryption/decryption, key management, etc.), this includes: certificate/license management, SNMP, SSH, memory management/configuration, network management/configuration, upgrade installations/services, user resources, and so on.

Each resource **40** may be associated with a quorum policy **51** that defines how a resource object may be accessed, configured, updated, viewed and so on. For example, a network driver object is a resource that may have an attached quorum policy stating what users, or user roles, or other services can adjust or view the network settings (and which settings, and the extend of the setting changes and parameters) on the HSM. Whenever a user desires to configure a resource, the quorum policy **51** is inquired to determine access rights/permissions (e.g. view, change, delete, new, etc.). Each object/resource may also have a corresponding quorum request **52** to provide indication of a status of a configuration request change, for instance, allowing a user to modify a resource object. The request includes data about the object and quorum policy. For example, in the network device example, the quorum policy may state that three (3) authorized administrators are required for a configuration change request, with a threshold of 2 administrators giving approval. The quorum request **52** can provide a description of the policy, the related attributes, who is authorized, the reasons, resource expiration dates, the date/time, and so on. A quorum ID is associated with each resource for the quorum manager **37** to inquire as to the state/status of the quorum request **52** and any attached quorum policy **51.**

**FIG. 1B** depicts an exemplary communication environment **100** for configuring an HSM **10** via quorum authorization services **60** in accordance with one embodiment. The quorum authorization services **60** via API can serve to configure other devices in the communication environment aside from only an HSM. The HSM **10** is configurable remotely via the API providing quorum authorization services **60.** In another embodiment, the HSM may also reside in a networked data center **80** for providing cloud HSM services. For example, a 3^{rd} party service **70** requests configuration controls to the HSM **10,** for instance, to configure it for client data protection and encryption services. Separately, three or more administrative users, by way of their communication device (e.g., **103, 102),** can then authorize the request for configuration of the HSM **10** for that party **70** via the quorum services API **60.** Responsive to receiving the quorum request from the 3^{rd} party service **70,** each administrative user can individually authorize, by way of their communication device **103,** the necessary authorization to allow that party **70** to remotely configure the HSM **10.** In practice, software on the user's communication implements the quorum services API **60,** which then, by way of the method **300** discussed ahead, authorizes the HSM **10** for configuration by the 3^{rd} party service **70** requestor.

Notably, the 3^{rd} party service provider **70** is not limited to functioning only as a cloud HSM service offering. It can represent any one, or multiple service offerings, for example, services for: authentication, authorization, attestation, attribute provisioning, credentials, certificate authority, trust, and cryptography. Accordingly, the quorum authorization service **60** via API can be used to authorize any 3^{rd} party services for the aforementioned services, for example, to enhance the trust in their private attestations, or others related to the HSM, for example, remotely authorizing one or more microservices via APIs on the HSM, and so on.

In a conventional remotely hosted payment infrastructure, one or more payment HSMs may be deployed in the data center **80.** The HSMs are used for real time authorization and authentication in critical infrastructure, and thus are typically engineered to support standard high availability models including clustering, automated failover, and redundant field-replaceable components. Each HSM may be allocated to end-user clients by a current process performed manually by an operator, on-site. Stated otherwise, an on-site manual access to the HSM server allows provisioning the hosted HSM to specific end-user client(s) during the deployment lifecycle of a payment system. Subsequently, and over the entire system's lifetime, end-user's payment applications may remotely access resources in the HSM using a conventionally known secure system's client/server architecture. Such remote access also allows for highly flexible HSM management by end-users via a secure management interface, for configuration of the HSM during the operation lifecycle, which meet the requirements of complex network infrastructures and demanding business environments. This supports multiple types of payment service offerings and offers more capabilities to run functions securely in a broader range of operating environments.

The communication environment **100** can include a telecommunication network **113** and an internet communication network (Internet) **120.** The telecommunication network **113** can provide a mobile communication link via base receiver **110** for wireless connectivity of a mobile device **102** from one or more cells **107.** In one arrangement, the mobile device **102** can communicate over a Radio Frequency (RF) link with the base receiver **110** using a standard communication protocol such as legacy 2G (CDMA, GSM) and 3G, or LTE 4G and 5G. The base receiver **110,** in turn, can connect the mobile device **102** to the Internet **120** over a packet switched link. The internet can support application services and application service layers **150** for providing media or content to the mobile device **102.** By way of the communication environment **100,** the mobile device **102** can establish connections with a server/service **130** on the network and with other mobile devices for exchanging information or providing services such as audio, text messaging, media, audio, video, interactive applications, and the like. The server **130** can have access to a database that is stored locally or remotely and which can contain profile data. The server can also host application services directly, or over the Internet **120.**

The mobile device **102** can also connect to the Internet over a Wi-Fi or WLAN 105. Wireless Local Access Networks (WLANs) provide wireless access to the mobile communication environment within a local geographical area. WLANs can also complement loading on a cellular system, so as to increase capacity. Wi-Fi is the wireless technology used to connect computers, tablets, smartphones and other devices to the internet. Wi-Fi is the radio signal sent from a wireless router to a nearby device, which translates the signal into data for the user of the mobile device **102.** Wi-Fi is a family of wireless network protocols, based on the IEEE 802.11 family of standards, which are commonly used for local area networking of devices. WLANs are typically composed of a cluster of Access Points (APs) **104** also known as base stations. The mobile communication device **102** can communicate with other WLAN stations such as a laptop **103** within the base station area **105.** In typical WLAN implementations, the physical layer uses a variety of technologies such as IEEE 802.11 technologies. The physical layer may use infrared, frequency hopping spread spectrum in the 2.4 GHz or 5GHz Band, or sequence spread spectrum. The mobile device **102** can send and receive data to the server **130** or other remote servers on the mobile communication environment. In one example, the mobile device **102** can send and receive audio, video, or other multimedia content from the database through the server **130.**

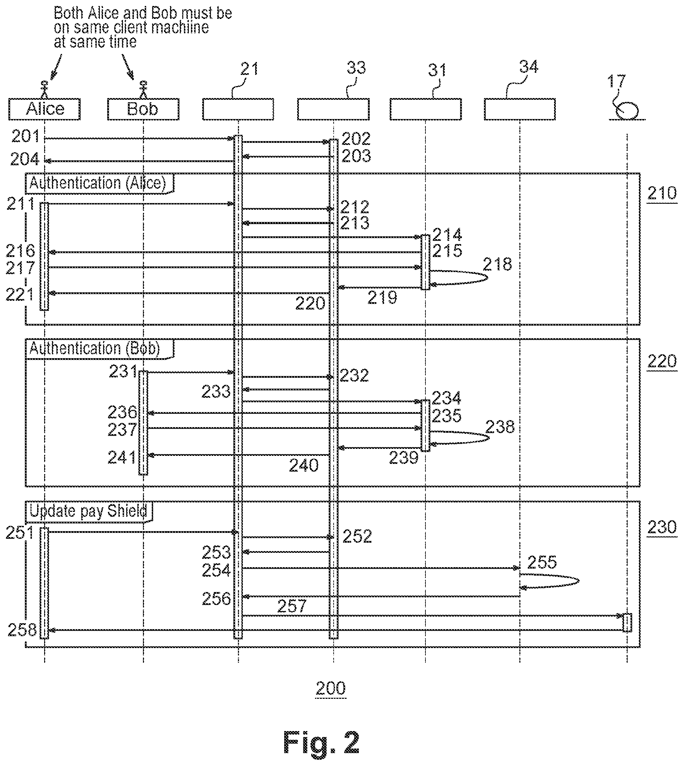

**FIG. 2** depicts a quorum authorization (or m-of-n) sequence **200** on HSM as it currently exists. Notably, there are three separate interaction events: Authentication of first user event **(210),** Authentication of second user event **(220),** and the actual configuration event change **(230)** for the HSM. In order to make any modifications on the HSM (aka, configuration event change, for example, to change access policies or adjust network settings) multiple users need to first authorize that change. Here we see that two users named Alice and Bob each have to separately authorize a change on HSM, and do so in a sequential order

Both Alice and Bob connect to HSM **10** using a user interface **21** rendered through a process running on HSM. Before authorization, the problem is that both users must physically meet at a same location so that they can access UI using the same computer for performing configuration setup steps **201-204.** That is, their physical attendance in front of the HSM is required to connect and enter their credentials (e.g. password, java cards), and in a specific order. Both will communicate to HSM **10** through UI **21** to input their credentials for authentication. The UI **21** maintains a session with the connection, which is managed by session manager **33** running on the HSM **10.** Session manager **33** can close the session in case of errors or timeouts. User credentials are verified by Authentication module **31.** For instance, once Alice and Bob have each logged into the HSM, inserted their JavaCards and entered their card passwords, the HSM will establish the session.

In the first user authentication event **210,** at step **201,** one of the users (in this example, Alice) begins the first formal interaction with the HSM for making a connection request for configuration changes. The UI **21** process connects to session manager **33** to create a session for this connection request shown as step **202.** Session manager generates a random session ID and returns it back to UI in step **203.** Since none of the users are currently authenticated this session is considered un-authenticated. Session ID returned from session manager **33** is tied with connection opened by Alice.

Alice starts the authentication sequence through UI **21** by sending authentication request in step **211** over the same session. UI **21** checks with session manager **33** if session is still valid or not at step **212.** Session manager **33** responds with a session still valid response at step **213.** UI **21** forwards the Authentication request to authentication module **31** in step **214.** Authentication module **31** initiates a challenge-response authentication sequence to authenticate Alice in step **215** by sending a challenge to Alice. Alice generates a response to that challenge in step **216** and responds in step **217.** Authentication module **31** validates the response **218** and returns authentication success in **219.** Session manager **33** updates session information to mark the session as authenticated for user Alice **220** and returns in step **221.** Once Alice has authenticated, Bob may begin his authentication sequence over the same session at step **231.**

In the second user authentication event **220,** at step **231,** that user (Bob) requests a configuration change. The UI **21** checks with session manager **33** if the session initiated by the first user (Alice) is still valid or not at step **232.** If so, session manager **33** responds with a session still valid response at step **233.** UI **21** forwards the second user's Authentication request to authentication module **31** in step **234.** Similarly, as was done with Alice, the Authentication module **31** initiates a challenge-response authentication sequence to authenticate Bob in step **235** by sending a separate challenge to Bob. Bob generates a response to that challenge in step **236** and responds in step **237.** Authentication module **31** validates the response **238** and returns authentication success in **239.** Session manager **33** updates session information to mark session as authenticate for user Bob at step **240** and returns in step **241.**

Once both the users have successfully authenticated over the same session, the HSM **10** permits them to make configuration changes. This is seen in the event change "Update Payshield" **230,** where Payshield is an exemplary product name of the HSM. In this state, Alice and Bob can then start a configuration change process, for example, to update the HSM configuration settings, depicted by steps **251-258.** Accordingly, at step **251,** configuration changes are sent through UI **21** to the HSM **10,** which it then processes to reconfigure itself in accordance with their changes. UI **21** checks with the session manager **33** to confirm the session is still valid at step **252.** Session manager **33** responds with a session still valid response at step **253.** Their configuration changes request is then sent to the enforcement module at step **34.**

This enforcement module **34** verifies the changes and validates if the users have authenticated on the same session, and ensures these users (Alice and Bob) are authorized to make requested changes in step **255.** Any configuration changes are passed to enforcement module **34** which validates that both users have authenticated on the same session and that they have permission to make requested changes. Enforcement module **34** returns a result of that verification and validation activity at step **256.** If result is true, UI commits changes to database **17** at step **257** and returns a success response to Alice and Bob at step **258.** That is, if Alice and Bob are authorized to make changes, changes are committed to configuration database **17.** Any departure from these specific events will not result in a successful authentication or a configuration change (e.g. update configuration settings of the HSM 10).

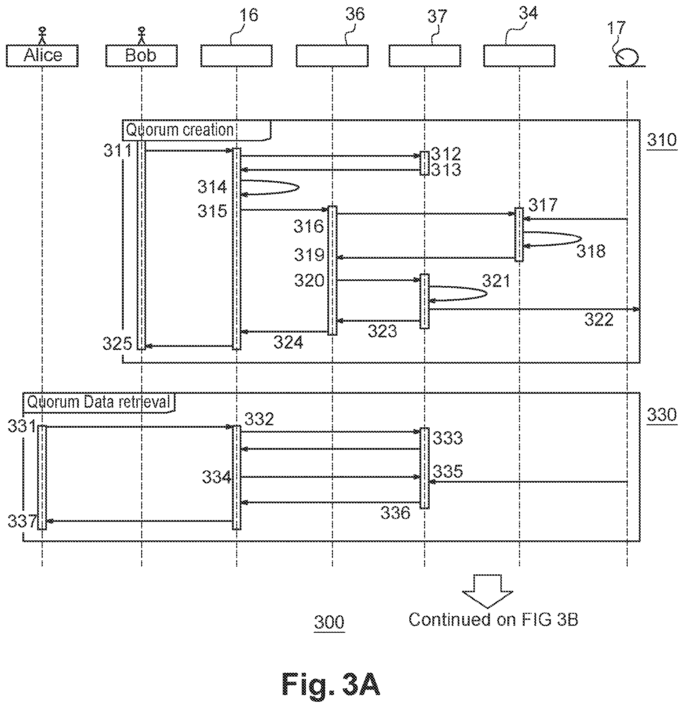

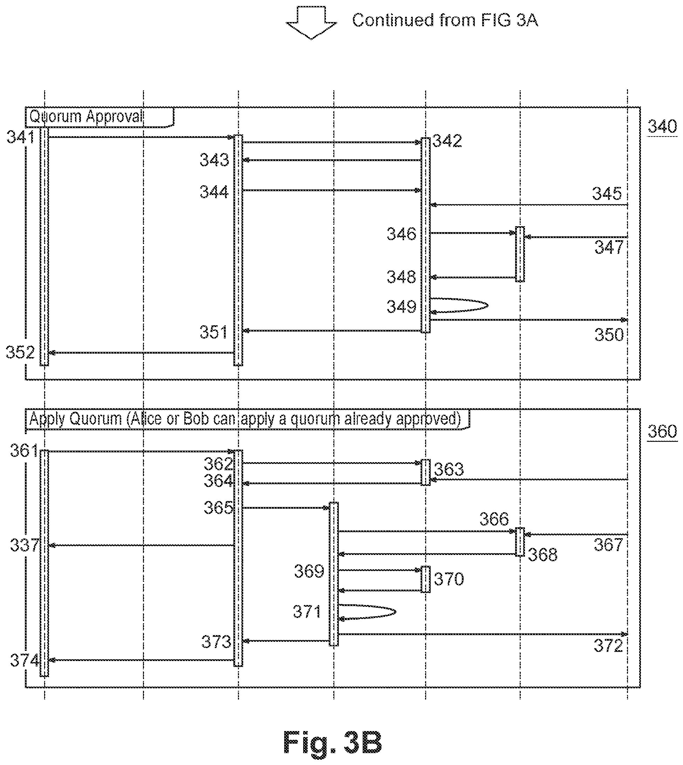

**FIGS. 3A** and **3B** are consecutive sequence diagrams that provide an alternate method **300** of quorum authorization whereby users can configure a secure device remotely. Advantageously, it is not limited to the sequential order as required in **FIG. 2****,** and does not require that the users be present together to make configuration changes to HSM 10. It also overcomes the inefficiencies of the quorum authorization (or m-of-n) sequence **200** described in **FIG. 2****;** namely, 1) remotely working in coherence with access only to a shared secret for any operational requirement, and 2) control over every resource defined by the system as operational configuration by every shareholder

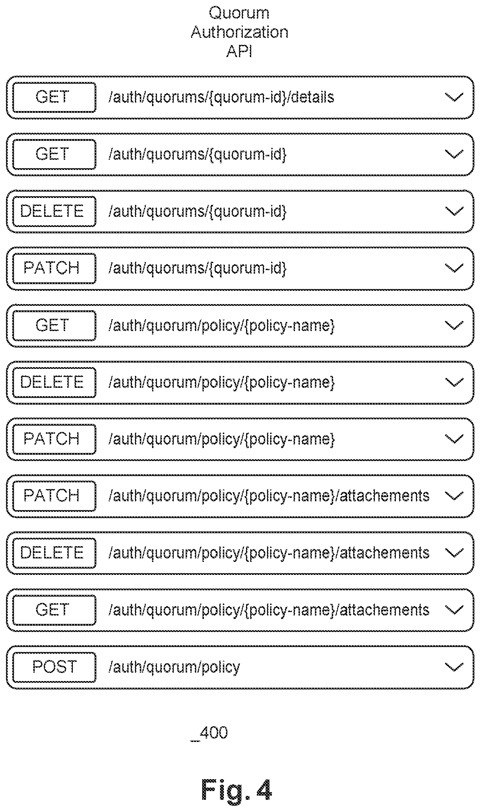

In a preferred embodiment, the method **300** is implemented within the HSM **10,** but in practice, can operate on any other secure device configured for authentication and authorization needing simultaneous approval from multiple operators. Moreover, the modules by which the method **300** is implemented can be practiced from those within the HSM **10** (e.g. SW **15,** microservices **14** in FIG 1A), or service modules external to the HSM **10** (e.g., other microservices provide via 3^{rd} party service provider **70** in FIG. 1B). The method **300** is implemented in part, by way of the quorum authorization API **400** shown in **FIG. 4****,** described ahead. That is, some of the processes **13,** microservices **14,** and SW **15** in FIG **1****,** either implement or call the components of API **400** discussed ahead.

Briefly, there are four (4) main event categories for the method **300** shown in FIGS 3A-3B: Quorum creation **(310),** Quorum Data retrieval **(320),** Quorum Approval **(330)** and Quorum Application **(340).** Each of these is discussed in detail next. As a preliminary step, it should be noted that in this example, the two users Alice and Bob have already been authorized to make changes to a resource on the HSM, for instance, which can be configured by HSM administrator through quorum policies. Here, the HSM 10 **can** be configured to require a certain number "m" of users to approve changes on a resource.

It should also be noted that resources inside the HSM **10** are accessible, individually, or via the combination of API gateway **16** and Resources API **36.** To that point, each resource **40** (see FIG 1A) has its own API specific to the use and configuration of that resource. For example, a network resource has its own network API, for instance, to configure capabilities of network drivers. As another example, a webserver resource may have its own webserver API to configure service capabilities, such as IP addresses, IP ranges, and so on. To keep track of the various resource APIs, the Resource Manager API **36** (see FIG 1A) is provided for managing these individual API's at a higher level. In this manner, a service, by way of the Resource Manager API **36** can inquire as to capabilities, use and availability of the resources.

Understandably, when it is necessary to however access or use a resource on the HSM **10** via API gatewary **16,** certain policies thereon may dictate what users can or cannot do with the resources **40.** In the cases where a quorum policy **51** requires a quorum approval for accessing/using a resource the quorum management module **37** is involved. The Quorum management module **37** maintains list of all pending, approved and expired quorum requests. In conjunction with this module, the Enforcement **34** module is responsible for enforcing quorum policies configured on the HSM **10** before any change is committed to database **17.**

The Quorum creation **(310)** event is represented by steps **311-325,** which together demonstrate creation of a new quorum request **52.** A new quorum request **52** is automatically created whenever a user tries to perform an operation on a resource on the HSM that requires approval from multiple users/administrators. Quorum request **52** is identified inside the HSM by a unique quorum identifier (id). The quorum request **52** stores information about a current state of quorum request **52,** for example, an expiration time, a required approval, received approvals and other information. In the present example, at step **311,** Bob requests configuration change on a resource by invoking HSM API gateway **16** along with an access token received after authentication. In practice, a POST resource access token can be sent. API gateway **16** sends access token (Get User) to Quorum management module **37** to validate the user is authentic and exists in the system (e.g. as a data center HSM customer, an HSM user, or administrator) in step **312.** Quorum management module **37** validates the user and sends the user identity (Bob) to API gateway **16** in step **313.** API gateway **16** checks internal rules (e.g. post resource access token; quorum policy) to determine to which resource manager API **36** micro-service to send the request in step **314** and invokes appropriate resource manager API **36** with name of user. Resource manager API **36** also consults enforcement module **34** to determine if Bob is authorized to perform requested operation, at step **316.**

Enforcement module **34** reads an internal authorization policy from database **17.** Enforcement module **34** determines from the quorum policy **51** whether the operation on the resource by the user requires a quorum before the configuration change is committed at step **318.** Resource manager API **36** prepares a quorum request **52** after step **319** and then sends request to Quorum management module **37** to generate a quorum for the request along with all required data, at step **320.** Quorum management module **37** then creates a quorum identifier (id) **53** for the request at step **321** and stores the data associated with the quorum request **52** (quorum request data) in the database **17** at step **322.** Quorum management module **37** returns the generated quorum identifier **53** to resource manager API **36** at step **323.** Resource manager API **36** returns the quorum identifier **53** to Bob through API gateway as steps **324-325.**

The Quorum Data Retrievel **(330)** event stage is represented by steps **331-337.** Here, any other user who has access to the quorum request can get information about the quorum request by requesting it from the HSM. For instance, at step **331,** Alice can now invoke HSM APIs to get details (see GET/quorum-id; see API 400 FIG 4) of the generated quorum request by sending quorum identifier **53** via the API gateway **16.** At step **332,** the API gateway **16** checks with Quorum management module **37** to determine if Alice is allowed to access quorum id **53.** Quorum management module **37** validates Alice and returns response at step **333.** API gateway 16 then forwards the quorum request **52** to Quorum management module to retrieve details of quorum at step **334.** Quorum management module **37** reads quorum information from database **17** at step **335** and returns a response back to API gateway at step **336,** which in turn sends response back to Alice at step **337.** After looking at quorum details, Alice can choose to approve or reject quorum request in the next event stage.

The Quorum Approval **(340)** event stage is represented by steps **341-352.** Briefly, the user can votes to approve or deny a quorum request **52,** but only if they are authorized. Here, in this example, steps **341-352** demonstrate quorum approval sequence by Alice. At step **341,** Alice sends API request to HSM to approve the quorum with quorum identifier **53** to approve and authorize the token. API gateway **16** forwards the request to quorum management module **37** to determine if Alice is allowed to invoke resource API **36** at step **342.** Quorum management module **37** responds with yes at step **343** if Alice is authorized. Otherwise, the response is a no if she is not authorized. API gateway **16** then forwards the request to quorum management module **37** at step **344.**

Quorum management module **37** reads details of the quorum request **52** from database **17** at step **345.** Quorum management module **37** then consults enforcement module **34** if Alice has permissions/authorization to approve the request at step **346.** Enforcement module **34** reads the authorization for the quorum policy **51** from database at step **347** and responds back to quorum management module at step **348.** If Alice is authorized, the Quorum management module **37** increases an approval count of the quorum request **52** by one, at step **349** and stores this new data and information entry in database **17** at step **350.** Quorum management module **37** responds back to Alice through API gateway **16** at steps **351-352** to confirm/deny her approval. Once required approval has been received, one of the approvers can invoke resources API **36** to apply changes to the resource on the HSM.

The Quorum Application **(340)** event is represented by steps **361-374,** which depicts the sequence when an approver initiates commitment of changes. Here, once the required number of approvals has been received as indicated in a quorum policy **51,** the configuration change can be committed to the database **17.** Changes can be committed automatically once required approvals are received or request can be initiated by one of the approvers. Notably, Authentication is considered independent from authorization process. It is assumed that users have already authenticated and received an authorization (Access) token which acts as proof of authentication and identity of user.

At step **361,** Alice invokes API Gateway **16** to apply an approved change on HSM **10** at step **361.** The API gateway **16** consults with quorum management module **37** if Alice may invoke the API gateway **16** at step **362.** Quorum management module **37** reads policy data from database **17** at step **363** and responds to API gateway **16** at step **364.** The API gateway **16,** at step **365,** invokes actual resource management API **36** that had created the original quorum request **52.** Resource manager API **36** then sends the request to Enforcement module **34** to determine if Alice is allowed to apply quorum operation at step **366.** The Enforcement module **34** reads policy data from database **16** at step **367,** checks if Alice can approve changes at step **368,** and then responds to resource manager API **36** at step **369.** If Alice is allowed to apply the configuration changes to the resource/object, resource management API **36** reads quorum details (e.g., object/resource info, date, time, details, list of authorized quorum participants, quorum threshold, type of quorum policy, etc.) of the requested change from Quorum management module **37** at step **370.** Resource manager API **36** checks if a required vote (threshold) has been received at step **371,** and, it commits the request to database **17** at step **372.** Resource manager API **36** then returns status (success/failure) to user through API gateway **16** as seen in steps **373-374.**

**FIG. 4** depicts an exemplary quorum authorization API **400.** In a preferred embodiment, it is a RESTful API, which is an architectural style for an application program interface (API) that uses HTTP requests to access and use data. That data can be used to GET, PUT, POST, PATCH and DELETE command types, which refers to the reading, updating, creating and deleting of operations concerning resources. GET requests are used to retrieve data, and POST requests are used to create data (related to quorum and resources; also, to produce and consume the quorum services and data) with the REST API. REST is a logical choice for building APIs that allow users to connect to, manage and interact with cloud services flexibly in a distributed environment, and allows cloud consumers to expose and organize access to HSM based web services. Briefly, as previously mentioned, the method **300** of **FIG. 3** is provided in part from services or process that implement, or call, the quorum authorization API **400.** The API in practice includes more components/modules than those shown, and merely provides an example of the API type.

As see in **FIG. 4****,** in accordance with RESTful practice, there are GET methods for quorum details, quorum ID **53,** quorum request **52,** quorum policy **51** name, policy and data attachments. There are also corresponding PATCH, POST and DELETE methods for the quorum attributes associated with the resources **40.** Other methods and entries are also contemplated for alternate code practice (non-RESTful): isRequired(), isRequiredToView(), isRequiredToUpdate(), setQuroumExpiryDate(), getQuorumPolicy(resource ID), setQuorumPolicy(resource ID, policy), getQuorumID(), isApproved(ID), approveQuorum(ID), getAuthorizedUsers(), setAuthorizedUsers(list of names, quorum acceptance threshold), status = approve(ID,user), and so on.

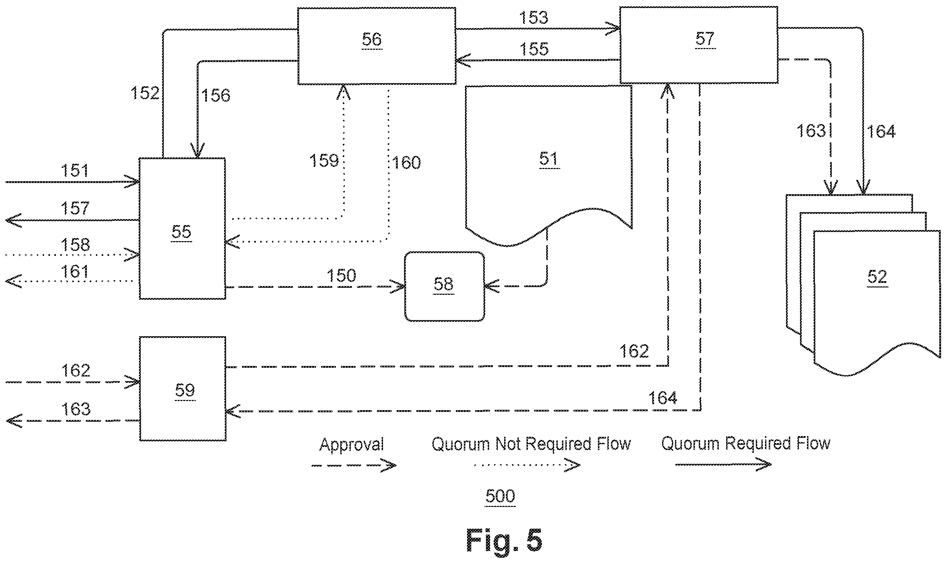

All the method and actions seen in the flowchart **500** of **FIG. 5** have corresponding entries in the quorum authorization API **400.** For example, API entries exist for determining if an object/resource requires a quorum, whether a quorum policy is attached to an object, retrieving or storing quorum requests, getting/setting quorum thresholds/counts, viewing approval quorum status, and updating objects and policies, among others. Similarly, API entries for getting, putting, posting, deleting or patching any quorum related information are also included in the API. The quorum authorization API **400** supports various RESTful data formats: /json and /xml. The RESTful format is useful in cloud applications because the calls to the API are stateless, and can scale to accommodate load changes. Any RESTful request can be directed to any instance of a quorum related object or component.

The architectural style for APIs is typically categorized as either being SOAP (former acronym for "Simple Object Access Protocol", but referring now to a "Service Oriented Architecture", SOA for Web services) or REST (Representational State Transfer), and both are used to access Web services. While SOAP relies solely on XML to provide messaging services, REST offers a more lightweight method, using URLs in most cases to receive or send information. REST uses different HTTP 1.1 verbs, also known as access "methods" to perform tasks. These methods are GET, POST, PUT, and DELETE, which refers to the reading, updating, creating and deleting of operations concerning objects or resources, respectively. Unlike SOAP, REST does not have to use XML to provide the response. Some REST-based Web services output the data in Command Separated Value (CSV), JavaScript Object Notation (JSON) and Really Simple Syndication (RSS). The advantage with REST is that the output needed can be obtained in a form that is easy to parse within the language of the application specifically concerned.

In the embodiments of the invention presented herein, REST offers an alternative to, for instance, SOAP as method of access to a web service. In order to be used in a REST-based application, a web service needs to meet certain constraints. Such a web service is called RESTful. A RESTful web service is required to provide an application access to its web resources in a textual representation and support reading and modification of them with a stateless protocol and a predefined set of operations. By being RESTful, web services provide interoperability between the computer systems on the internet that provide these services. RESTful APIs embody the rules, routines, commands, and protocols that integrate the individual microservices, so they function as a single application. In a RESTful web service, requests made to a resource's URL will elicit a response with a payload formatted in HTML, XML, JSON, or some other format. The response can confirm that some alteration has been made to the resource state, and the response can provide hypertext links to other related resources. When HTTP is used, the operations (HTTP methods) available can comprise: GET, POST, PUT, DELETE, PATCH, and/or OPTIONS.

The Hypertext Transfer Protocol (HTTP) is designed to enable communications between clients and servers over the Internet. HTTP works as a request-response protocol between a client and a server. For example: a client (browser) sends an HTTP request to the server; then the server returns a response to the client. The response contains status information about the request and may also contain the requested content. The two most common HTTP methods are: GET and POST. The GET method is used to request data from a specified resource. Like the PUT method, the POST method is used to send data to a server to create/update a resource. The data sent to the server with POST is stored in the request body of the HTTP request. The difference between POST and PUT is that PUT requests are idempotent. That is, calling the same PUT request multiple times will always produce the same result. In contrast, calling a POST request repeatedly have side effects of creating the same resource multiple times.

FIG. **5** depicts an exemplary flowchart 500 for quorum and non-quorum authorization as would be expected to occur in an HSM. As depicted, there are three (3) path flow types: i) quorum required flow (solid line), ii) quorum not required flow (dotted line), and iii) approval flow (bold line). The flowchart **500** shows multiple state operators, some of which correlated, or represent, components within the HSM of FIG. 1. For example, the resource manager **55** corresponds to resource API manager **36;** Quorum management **57** and quorum manager **59** relate to quorum **37.** Quorum policy enforcement **56** relates to enforcement module **34.** Resource "foo" **58** represents any of the resources **40** (e.g., network, CPU, memory, user, syslog, etc.). Here, it is assumed in the flowchart sequences that an "update" request on resource "foo" requires a quorum and "view" operation does not require a quorum. Understandably, depending on the resource object, and the quorum policy, the authorizsed operations will differ (e.g., view, update, delete, copy, modify, add, etc.)

### Authortization without a Quorum

Steps 158-160 are directed to a VIEW operation, and demonstrate change of resource without requiring quorum authorization. Here, the user invokes a view API on the "foo" resource in step 158. Resource manager 32 consults quorum enforcement module 34 to check if view requires quorum or not. Since no quorum is required enforcement module responds with no quorum required. Resource manager allows view request to proceed 160 and return success 161 to user.

### Authortization with a Quorum

In contrast, steps 151-157 are directed to an UPDATE operation, and demonstrate creation of a new quorum requests whenever an operation is attempted that requires quorum authorization. Here, the resource requires a quorum and approval before configuration changes are permitted. With regards to the exemplary UPDATE operation, at step **151** an authorized user on HSM invokes API to update an example resource "foo". This request lands in resource manager **55** responsible for managing resources. Resource manager **55** consults quorum enforcement **56** if a quorum is required to update foo, at step **152.** Because a quorum is required to update "foo", the enforcement module **56** sends a request to quorum management module **57** in step **153.** Quorum management **57** generates a unique quorum id **53** and stores update foo parameters in the database **17** in step **154.** Quorum management module **57** then returns generated quorum id **53** to user in step **156** and **157.**

Steps **162-165** demonstrate voting for a pending quorum request by an authorized person. Here, another user can then cast a vote to approve or disapprove the change associated with quorum id **53,** steps **162-165.** For example, another user initiates request to approve the quorum request **52,** at step **161.** Quorum manager **59** API sends request to quorum management module **57** in step **162.** Quorum management module **57** validates if the another user is authorized to approve the quorum. If this user is allowed to approve the quorum, quorum management module **57** increases the approved voting count by one in database 17 at step **163,** and responds back to user in steps 164-165.

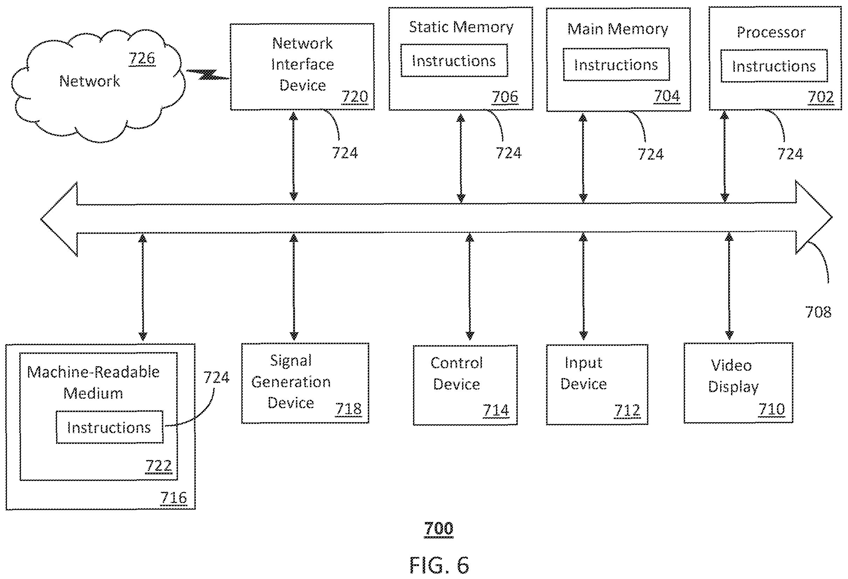

**FIG. 6** depicts an exemplary diagrammatic representation of a machine 700 and hardware platform suitable for use to perform the methods and steps exemplified in FIGS 2, 3A-3B and 4, and by components of the HSM 10 of FIG. 1A, in accordance with various embodiments. For example, the method 200 and 300 can be performed by a hardware processor of the machine 700 executing computer program code instructions from an electronic memory to execute at least the method steps 201-258 (FIG 2), 311-374 (FIGS 3A- 3B) and 151-164 (FIG 5). At least one a hardware processor of machine 700 can execute computer program code instructions from an electronic memory to execute processes of at least one microservice (via API gateway 16 or Resources API 36) running in an operating system of said HSM to support operation of said resources (40), resource manager API (36), said enforcement module (34), and said quorum manager (37).

The machine 700 is shown in the form of a computer system 700, within which a set of instructions, when executed, may cause the machine to perform any one or more of the methodologies discussed above. In some embodiments, the machine operates as a standalone device, such as a computer, laptop, mobile device, remote control, or display. In some embodiments, the machine may be connected over the network to other machines. In a networked deployment, the machine may operate in the capacity of a server or a client user machine in server-client user network environment, or as a peer machine in a peer-to-peer, or distributed, network environment.

The machine may comprise a server computer, a client user computer, a personal computer (PC), a tablet PC, a laptop computer, a desktop computer, a mobile device, a cell phone, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system 700 may include a processor 702 (e.g., a central processing unit (CPU), a graphics processing unit (GPU, or both), a main memory 704 and a static memory 706, which communicate with each other via a bus 708. The computer system 700 may further include a video display unit 710 (e.g., a liquid crystal display or LCD), a flat panel, a solid state display, or a cathode ray tube (CRT)). The computer system 700 may include an input device 712 (e.g., a keyboard, touchless sensing unit 110), a cursor control device 714 (e.g., a mouse, touchless sensing unit 110), a disk drive unit 716, a signal generation device 718 (e.g., a speaker or remote control) and a network interface device 720.

The disk drive unit 716 may include a machine-readable medium 722 on which is stored one or more sets of instructions (e.g., software 724) embodying any one or more of the methodologies or functions described herein, including those methods illustrated above. The instructions 724 may also reside, completely or at least partially, within the main memory 704, the static memory 706, and/or within the processor 702 during execution thereof by the computer system 700. The main memory 704 and the processor 702 also may constitute machine-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable medium 722 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

The term "machine-readable medium" shall accordingly be taken to include, but not be limited to: solid-state memories such as a memory card or other package that houses one or more read-only (non-volatile) memories, random access memories, or other rewritable (volatile) memories; magneto-optical or optical medium such as a disk or tape; and carrier wave signals such as a signal embodying computer instructions in a transmission medium; and/or a digital file attachment to e-mail or other self-contained information archive or set of archives is considered a distribution medium equivalent to a tangible storage medium. Accordingly, the disclosure is considered to include any one or more of a machine-readable medium or a distribution medium, as listed herein and including art-recognized equivalents and successor media, in which the software implementations herein are stored.

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented in entirely hardware, entirely software (including firmware, resident software, micro-code, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Scheme, Go, C++, C#, VB.NET, Python or the like, conventional procedural programming languages, such as the "C" programming language, Perl, PHP, dynamic programming languages such as Python, Ruby and Groovy, or other programming languages. The program code may execute entirely on the user's computer, partly on the user's computer, as a stand-alone software package, partly on the user's computer and partly on a remote computer, entirely on the remote computer or server, or within the Cloud or other computer network. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS), Platform as a Service (PaaS) for connecting mobile apps to cloud based services, and Security as a Service (SECaas).

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the flowchart and/or block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the flowchart and/or block diagram block or blocks.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed.

## Claims

1. A computer implemented method for distributed quorum authentication enforcement of a Hardware Security Module (HSM) device (10), whereby when a user accesses a resource (40) on the HSM device (10) that user's access is enforced according to a quorum ID and a quorum expiry period via the Applications Programming Interface (API) gateway (16) responsive to real time authentication of administrators remotely working in coherence with access to a shared secret for authorizing HSM operations needing simultaneous approval within the quorum expiry period for the quorum ID, **characterized in that** the method comprises the steps of,
in a quorum creation event stage (310):
creating a quorum request (52) when an operation on said resource (40) is attempted that requires quorum authorization, by:
inquiring a quorum policy (51) if a quorum is required to access said resource
generating the quorum request (52) in accordance with said quorum policy (51) and storing it in a database (17) for attaching it to said resource (40),
generating the quorum identifier (ID) for that user's access on the HSM to associate with said resource (40) included in the quorum request
responsive to said creating of said quorum request (52), informing said administrators to each provide an approval status for said quorum request (52) in real time via said API gateway
in a quorum approval event stage (330):
responsive to receiving said approval status from said administrators working in coherence to complete the shared secret for said HSM operations via said API gateway (16) within the quorum expiry period for the quorum ID, validating said administrators are authorized to approve said quorum request (52),
if validated, updating a voting count on the quorum request (52) in a database (17); and
informing said user via said API gateway (16) of said approval status, and enforcing an access to said resource in accordance with said quorum policy (51) and updated quorum request (52),
wherein said quorum request includes said quorum ID, an approval threshold, a voting count, the quorum expiry period, and an approval status.

2. The method of claim 1 further comprising,
in a quorum data retrieval event stage (310), via said API gateway (16)
checking whether said administrators are allowed to access said quorum ID; and
if so,
providing details of said quorum request (52) to said administrators via said API gateway (16).

3. The method of claim 1 further comprising,
in a quorum application event stage (340), via said API gateway (16):
checking whether said administrators are allowed to access said quorum ID; and
if so,
retrieving details of said quorum request (52); and
if an approval threshold is met in view of said voting count and within said quorum expiry period, updating said approval status to indicate quorum is approved for said resource, and committing said approval status in said database (17) for said quorum request (52).

4. The method of claim 1 is performed by a hardware processor executing computer program code instructions from an electronic memory to execute at least said method steps.

5. The method of claim 1, wherein said operation on said resource comprises one among update, view, modify, copy or delete.

6. The method of claim 1, wherein said API gateway (16) is in an architectural style of a RESTful API using HTTP requests to produce and consume data related to quorum services via at least one of a GET, PUT, POST, PATCH and DELETE command type.

7. A Hardware Security Module (HSM) device implementing a distributed quorum authentication enforcement through a API gateway (16), whereby when a user accesses a resource (40) on the HSM device (10), that user's access is enforced according to a quorum ID and a quorum expiry period via the Applications Programming Interface (API) gateway responsive to real time authentication of administrators remotely working in coherence with access to a shared secret for authorizing HSM operations needing simultaneous approval within the quorum expiry period for the quorum ID, **characterized in that** the HSM comprises:
one or more resources (40),
a resource manager API (36) for accessing said one or more resources (40),
an enforcement module (34) for enforcing access to said one or more resources via said API gateway (16) according to a quorum policy (51), and
a quorum manager (37) for generating and storing a quorum (52) request in a database (17),
wherein
in a quorum creation event stage (310):
said enforcement module (34) inquires a quorum policy (51) if a quorum is required to access said resource (40),
said quorum manager (37) creates a quorum request (52) when an operation on said resource 40 is attempted that requires quorum authorization, by:
generating the quorum request (52) in accordance with said quorum policy (51) and storing it in a database (17) for attaching it to said resource (40),
generating the quorum identifier (ID) for that user's access on the HSM to associate with said resource (40) included in the quorum request (52),
responsive to said creating of said quorum request (52), said resource manager API (36) informs administrators to each provide an approval status for said quorum request (52) via said API gateway (16),
in a quorum approval event stage (330):
responsive to receiving said approval status from said administrators working in coherence to complete the shared secret for said HSM operations via said API gateway (16) within the quorum expiry period for the quorum ID, said quorum manager (37) validates said administrators are authorized to approve said quorum request (52),
if validated, updates a voting count on the quorum request (52) in a database (17); and
informs said user via said API gateway (16) of said approval status, and enforcement module 34 enforces an access to said resource in accordance with said quorum policy (51) and updated quorum request (52),
wherein said quorum request includes said quorum ID, an approval threshold, a voting count, the quorum expiry period, and an approval status.

8. The HSM of claim 7 wherein during said quorum creation (310) event stage:
said API gateway (16) sends access token to quorum manager (37) to validate whether the user is authentic and exists;
said quorum manager (37) validates said user and sends user identity to said API gateway (16), which checks internal rules to determine to which micro-service of said resource manager API (36) to send the quorum request (52) and invoke appropriate resource manager API (36) with name of said user.

9. The HSM of claim 8, wherein
said resource manager API (36) consults Enforcement module (34) to determine if the user is authorized to perform requested operation;
said enforcement module (34) reads internal authorization policy from database (17), and determines from said quorum policy (51) if the operation requires a quorum before a configuration change is committed on said resource; and
said resource manager API (36) prepares a quorum request (52) and sends request to Quorum manager (37) to generate a quorum request (52) along with required data to store in database.

10. The HSM of claim 9, wherein
said Quorum manager (37) creates said quorum identifier (53) for said quorum request (52) and stores data associated with the quorum request (52) in the database (17),
said Quorum manager (37) returns the generated quorum identifier (53) to resource manager API (36) to the user through API gateway (16).

11. The HSM of claim 7 wherein, during the quorum approval (340) event stage, each administrator votes to approve or deny a quorum request if they are authorized, whereby:
said API gateway (16) requests HSM to approve the quorum with quorum identifier (53) and authorize a token that validates the administrator;
said API gateway (16) forwards the request to quorum management module (37) to determine if the user is allowed to invoke resources API (36) and respond whether the user is authorized or not.

12. The HSM of claim 11 wherein
said quorum manager (37) reads details of the quorum request (52) from database (17), then consults enforcement module (34) if the administrator has authorization to approve the request;
said enforcement module (34) reads the authorization for the quorum policy (51) from database (17) and responds back to quorum manager, and
if the administrator is authorized, the quorum manager (37) increases an approval count of the quorum request (52) and stores this information as an entry in database (17), and
responds back to the administrator through API gateway (16) to confirm or deny the user approval, wherein once a required approval has been received, the user can invoke resources API (36) to apply configuration changes on said HSM.

13. The HSM of claim 11 further comprising at least one a hardware processor executing computer program code instructions from an electronic memory to execute processes of at least one microservice running in an operating system of said HSM to support operation of said resources (40), resource manager API (36), said enforcement module (34), and said quorum manager (37).

## Patentansprüche

1. Computerimplementiertes Verfahren für eine Durchsetzung einer verteilten Quorum-Authentifizierung einer Hardware-Sicherheitsmodulvorrichtung (HSM-Vorrichtung) (10), wobei, wenn ein Benutzer auf eine Ressource (40) auf der HSM-Vorrichtung (10) zugreift, der Zugriff dieses Benutzers gemäß einer Quorum-ID und einer Quorum-Ablaufdauer über das Anwendungsprogrammierschnittstellen-Gateway (API-Gateway) (16) als Reaktion auf eine Echtzeit-Authentifizierung von Administratoren durchgesetzt wird, die entfernt in Kohärenz mit dem Zugriff auf ein gemeinsames Geheimnis arbeiten, zum Autorisieren von HSM-Operationen, die eine gleichzeitige Genehmigung innerhalb der Quorum-Ablaufdauer für die Quorum-ID benötigen,
**dadurch gekennzeichnet, dass** das Verfahren, in einer Quorum-Erstellungsereignisstufe (310), die Schritte umfasst:
Erstellen einer Quorum-Anforderung (52), wenn eine Operation an der Ressource (40) versucht wird, die eine Quorum-Autorisierung erfordert, durch:
Abfragen einer Quorum-Richtlinie (51), ob ein Quorum erforderlich ist, um auf die Ressource zuzugreifen
Erzeugen der Quorum-Anforderung (52) gemäß der Quorum-Richtlinie (51) und Speichern davon in einer Datenbank (17) zum Anhängen an die Ressource (40),
Erzeugen der Quorum-Identifikation (Quorum-ID) für den Zugriff dieses Benutzers auf das HSM für eine Zuordnung zu der Ressource (40), die in der Quorum-Anforderung eingeschlossen ist
als Reaktion auf das Erstellen der Quorum-Anforderung (52), Informieren der Administratoren, um jeweils einen Genehmigungsstatus für die Quorum-Anforderung (52) in Echtzeit über das API-Gateway in einer Quorum-Genehmigungsereignisstufe (330) bereitzustellen:
als Reaktion auf das Empfangen des Genehmigungsstatus von den Administratoren, die in Kohärenz arbeiten, um das gemeinsame Geheimnis für die HSM-Operationen über das API-Gateway (16) innerhalb der Quorum-Ablaufdauer für die Quorum-ID zu vervollständigen, Validieren, dass die Administratoren autorisiert sind, die Quorum-Anforderung (52) zu genehmigen,
falls validiert, Aktualisieren einer Stimmenzählung für die Quorum-Anforderung (52) in einer Datenbank (17); und
Informieren des Benutzers über das API-Gateway (16) über den Genehmigungsstatus, und Durchsetzen eines Zugriffs auf die Ressource gemäß der Quorum-Richtlinie (51) und der aktualisierten Quorum-Anforderung (52),
wobei die Quorum-Anforderung die Quorum-ID, eine Genehmigungsschwelle, eine Stimmenzählung, die Quorum-Ablaufdauer und einen Genehmigungsstatus einschließt.

2. Verfahren nach Anspruch 1, ferner umfassend,
in einer Quorum-Datenabrufereignisstufe (310), über das API-Gateway (16)
Prüfen, ob die Administratoren auf die Quorum-ID zugreifen dürfen; und
falls ja,
Bereitstellen von Details der Quorum-Anforderung (52) an die Administratoren über das API-Gateway (16).

3. Verfahren nach Anspruch 1, ferner umfassend,
in einer Quorum-Anwendungsereignisstufe (340), über das API-Gateway (16):
Prüfen, ob die Administratoren auf die Quorum-ID zugreifen dürfen; und
falls ja,
Abrufen von Details der Quorum-Anforderung (52); und
falls eine Genehmigungsschwelle in Hinblick auf die Stimmenzählung und innerhalb der Quorum-Ablaufdauer erreicht wird, Aktualisieren des Genehmigungsstatus, um anzuzeigen, dass das Quorum für die Ressource genehmigt ist, und Festschreiben des Genehmigungsstatus in der Datenbank (17) für die Quorum-Anforderung (52).

4. Verfahren nach Anspruch 1, das durch einen Hardware-Prozessor durchgeführt wird, der Computerprogrammcodeanweisungen aus einem elektronischen Speicher ausführt, um mindestens die Verfahrensschritte auszuführen.

5. Verfahren nach Anspruch 1, wobei die Operation an der Ressource eines von Aktualisieren, Betrachten, Modifizieren, Kopieren oder Löschen umfasst.

6. Verfahren nach Anspruch 1, wobei das API-Gateway (16) in einem Architekturstil einer RESTful-API vorliegt, unter Verwendung von HTTP-Anforderungen, um Daten in Bezug auf Quorum-Dienste über mindestens einen von einem GET-, PUT-, POST-, PATCH- und DELETE-Befehlstyp zu produzieren und zu konsumieren.

7. Hardware-Sicherheitsmodulvorrichtung (HSM-Vorrichtung), die eine verteilte Quorum-Authentifizierungsdurchsetzung durch ein API-Gateway (16) implementiert, wobei, wenn ein Benutzer auf eine Ressource (40) auf der HSM-Vorrichtung (10) zugreift, der Zugriff dieses Benutzers gemäß einer Quorum-ID und einer Quorum-Ablaufdauer über das Anwendungsprogrammierschnittstellen-Gateway (API-Gateway) als Reaktion auf eine Echtzeit-Authentifizierung von Administratoren durchgesetzt wird, die entfernt in Kohärenz mit dem Zugriff auf ein gemeinsames Geheimnis arbeiten, zum Autorisieren von HSM-Operationen, die eine gleichzeitige Genehmigung innerhalb der Quorum-Ablaufdauer für die Quorum-ID benötigen, **dadurch gekennzeichnet, dass** das HSM umfasst:
eine oder mehrere Ressourcen (40),
eine Ressourcenmanager-API (36) zum Zugreifen auf die eine oder die mehreren Ressourcen (40),
ein Durchsetzungsmodul (34) zum Durchsetzen des Zugriffs auf die eine oder die mehreren Ressourcen über das API-Gateway (16) gemäß einer Quorum-Richtlinie (51), und
einen Quorum-Manager (37) zum Erzeugen und Speichern einer Anforderung für ein Quorum (52) in einer Datenbank (17), wobei in einer Quorum-Erstellungsereignisstufe (310):
das Durchsetzungsmodul (34) eine Quorum-Richtlinie (51) abfragt, ob ein Quorum erforderlich ist, um auf die Ressource (40) zuzugreifen,
der Quorum-Manager (37) eine Quorum-Anforderung (52) erstellt, wenn eine Operation an der Ressource 40 versucht wird, die eine Quorum-Autorisierung erfordert, durch:
Erzeugen der Quorum-Anforderung (52) gemäß der Quorum-Richtlinie (51) und Speichern davon in einer Datenbank (17) zum Anhängen an die Ressource (40),
Erzeugen der Quorum-Identifikation (Quorum-ID) für den Zugriff dieses Benutzers auf das HSM für die Zuordnung zu der Ressource (40), die in der Quorum-Anforderung (52) eingeschlossen ist,
als Reaktion auf das Erstellen der Quorum-Anforderung (52), die Ressourcenmanager-API (36) Administratoren informiert, jeweils einen Genehmigungsstatus für die Quorum-Anforderung (52) über das API-Gateway (16) bereitzustellen, in einer Quorum-Genehmigungsereignisstufe (330):
als Reaktion auf das Empfangen des Genehmigungsstatus von den Administratoren, die in Kohärenz arbeiten, um das gemeinsame Geheimnis für die HSM-Operationen über das API-Gateway (16) innerhalb der Quorum-Ablaufdauer für die Quorum-ID zu vervollständigen, der Quorum-Manager (37) validiert, dass die Administratoren autorisiert sind, die Quorum-Anforderung (52) zu genehmigen,
falls validiert, eine Stimmenzählung für die Quorum-Anforderung (52) in einer Datenbank (17) aktualisiert; und
den Benutzer über das API-Gateway (16) über den Genehmigungsstatus informiert, und das Durchsetzungsmodul 34 einen Zugriff auf die Ressource gemäß der Quorum-Richtlinie (51) und der aktualisierten Quorum-Anforderung (52) durchsetzt,
wobei die Quorum-Anforderung die Quorum-ID, eine Genehmigungsschwelle, eine Stimmenzählung, die Quorum-Ablaufdauer und einen Genehmigungsstatus einschließt.

8. HSM nach Anspruch 7, wobei während der Ereignisstufe der Quorum-Erstellung (310):
das API-Gateway (16) ein Zugriffstoken an den Quorum-Manager (37) sendet, um zu validieren, ob der Benutzer authentisch ist und existiert;
der Quorum-Manager (37) den Benutzer validiert und die Benutzeridentität an das API-Gateway (16) sendet, das interne Regeln prüft, um zu bestimmen, an welchen Mikroservice der Ressourcen-Manager-API (36) die Quorum-Anforderung (52) zu senden ist und die entsprechende Ressourcen-Manager-API (36) mit dem Namen des Benutzers aufzurufen.

9. HSM nach Anspruch 8, wobei
die Ressourcenmanager-API (36) das Durchsetzungsmodul (34) konsultiert, um zu bestimmen, ob der Benutzer autorisiert ist, die angeforderte Operation durchzuführen;
das Durchsetzungsmodul (34) eine interne Autorisierungsrichtlinie aus der Datenbank (17) liest und aus der Quorum-Richtlinie (51) bestimmt, ob die Operation ein Quorum erfordert, bevor eine Konfigurationsänderung an der Ressource festgeschrieben wird; und
die Ressourcenmanager-API (36) eine Quorum-Anforderung (52) vorbereitet und die Anforderung an den Quorum-Manager (37) sendet, um eine Quorum-Anforderung (52) zusammen mit erforderlichen Daten zu erzeugen, um diese in der Datenbank zu speichern.

10. HSM nach Anspruch 9, wobei
der Quorum-Manager (37) die Quorum-Identifikation (53) für die Quorum-Anforderung (52) erstellt und Daten, die der Quorum-Anforderung (52) zugeordnet sind, in der Datenbank (17) speichert,
der Quorum-Manager (37) die erzeugte Quorum-Identifikation (53) an die Ressourcenmanager-API (36) über das API-Gateway (16) an den Benutzer zurückgibt.

11. HSM nach Anspruch 7, wobei während der Ereignisstufe der Quorum-Genehmigung (340) jeder Administrator abstimmt, um eine Quorum-Anforderung zu genehmigen oder abzulehnen, falls sie autorisiert sind, wobei:
das API-Gateway (16) das HSM anfordert, das Quorum mit der Quorum-Identifikation (53) zu genehmigen und ein Token zu autorisieren, das den Administrator validiert;
das API-Gateway (16) die Anforderung an das Quorum-Verwaltungsmodul (37) weiterleitet, um zu bestimmen, ob der Benutzer die Ressourcen-API (36) aufrufen darf, und zu antworten, ob der Benutzer autorisiert ist oder nicht.

12. HSM nach Anspruch 11, wobei
der Quorum-Manager (37) Details der Quorum-Anforderung (52) aus der Datenbank (17) liest, dann das Durchsetzungsmodul (34) konsultiert, ob der Administrator die Autorisierung aufweist, die Anforderung zu genehmigen;
das Durchsetzungsmodul (34) die Autorisierung für die Quorum-Richtlinie (51) aus der Datenbank (17) liest und dem Quorum-Manager antwortet, und
wenn der Administrator autorisiert ist, der Quorum-Manager (37) eine Genehmigungszählung der Quorum-Anforderung (52) erhöht und diese Informationen als einen Eintrag in der Datenbank (17) speichert, und
dem Administrator über das API-Gateway (16) antwortet, um die Benutzergenehmigung zu bestätigen oder abzulehnen, wobei, sobald eine erforderliche Genehmigung empfangen wurde, der Benutzer die Ressourcen-API (36) aufrufen kann, um Konfigurationsänderungen an dem HSM anzuwenden.

13. HSM nach Anspruch 11, ferner umfassend mindestens einen Hardware-Prozessor, der Computerprogrammcodeanweisungen aus einem elektronischen Speicher ausführt, um Prozesse mindestens eines Microservices auszuführen, der in einem Betriebssystem des HSM abläuft, um die Operation der Ressourcen (40), der Ressourcenmanager-API (36), des Durchsetzungsmoduls (34) und des Quorum-Managers (37) zu unterstützen.

## Revendications

1. Procédé mis en œuvre par ordinateur pour l'application d'une authentification de quorum distribué d'un dispositif de module de sécurité matériel (HSM) (10), moyennant quoi, lorsqu'un utilisateur accède à une ressource (40) sur le dispositif HSM (10), l'accès de cet utilisateur est appliqué selon un ID de quorum et une période d'expiration de quorum par l'intermédiaire de la passerelle d'interface de programmation d'applications (API) (16) en réponse à une authentification en temps réel d'administrateurs travaillant à distance en cohérence avec un accès à un secret partagé pour autoriser des opérations HSM nécessitant une approbation simultanée dans la période d'expiration de quorum pour l'ID de quorum, **caractérisé en ce que** le procédé comprend les étapes consistant à, dans une étape d'événement de création de quorum (310) :
créer une demande de quorum (52) lorsqu'une opération sur ladite ressource (40) qui requiert une autorisation de quorum est tentée, par :
l'interrogation d'une politique de quorum (51) pour savoir si un quorum est requis pour accéder à ladite ressource
la génération de la demande de quorum (52) conformément à ladite politique de quorum (51) et le stockage de celle-ci dans une base de données (17) pour l'attacher à ladite ressource (40),
la génération de l'identifiant (ID) de quorum pour l'accès de cet utilisateur sur le HSM à associer à ladite ressource (40) incluse dans la demande de quorum
en réponse à ladite création de ladite demande de quorum (52), le fait d'informer lesdits administrateurs afin que chacun fournisse un statut d'approbation pour ladite demande de quorum (52) en temps réel par l'intermédiaire de ladite passerelle API dans une étape d'événement d'approbation de quorum (330) :
en réponse à la réception dudit statut d'approbation à partir desdits administrateurs travaillant en cohérence pour compléter le secret partagé pour lesdites opérations HSM par l'intermédiaire de ladite passerelle API (16) dans la période d'expiration de quorum pour l'ID de quorum, le fait de valider que lesdits administrateurs sont autorisés à approuver ladite demande de quorum (52),
si validé, la mise à jour d'un décompte de votes sur la demande de quorum (52) dans une base de données (17) ; et
le fait d'informer ledit utilisateur par l'intermédiaire de ladite passerelle d'API (16) dudit statut d'approbation, et l'application d'un accès à ladite ressource conformément à ladite politique de quorum (51) et à la demande de quorum (52) mise à jour,
dans lequel ladite demande de quorum comporte ledit ID de quorum, un seuil d'approbation, un décompte de votes, la période d'expiration de quorum et un statut d'approbation.

2. Procédé selon la revendication 1, comprenant en outre,
dans une étape d'événement de récupération de données de quorum (310), par l'intermédiaire de ladite passerelle API (16)
le fait de vérifier si lesdits administrateurs sont autorisés à accéder audit ID de quorum ; et
si tel est le cas,
la fourniture des détails de ladite demande de quorum (52) auxdits administrateurs par l'intermédiaire de ladite passerelle API (16).

3. Procédé selon la revendication 1, comprenant en outre,
dans une étape d'événement d'application de quorum (340), par l'intermédiaire de ladite passerelle API (16) :
le fait de vérifier si lesdits administrateurs sont autorisés à accéder audit ID de quorum ; et
si tel est le cas,
la récupération des détails de ladite demande de quorum (52) ; et
si un seuil d'approbation est atteint au vu dudit décompte de votes et dans ladite période d'expiration de quorum, la mise à jour dudit statut d'approbation pour indiquer que le quorum est approuvé pour ladite ressource, et l'enregistrement dudit statut d'approbation dans ladite base de données (17) pour ladite demande de quorum (52).

4. Procédé selon la revendication 1 est réalisé par un processeur matériel exécutant des instructions de code de programme informatique à partir d'une mémoire électronique pour exécuter au moins lesdites étapes de procédé.

5. Procédé selon la revendication 1, dans lequel ladite opération sur ladite ressource comprend l'une parmi une mise à jour, une visualisation, une modification, une copie ou une suppression.

6. Procédé selon la revendication 1, dans lequel ladite passerelle API (16) est dans un style architectural d'une API RESTful utilisant des demandes HTTP pour produire et consommer des données liées à des services de quorum par l'intermédiaire d'au moins l'un parmi un type de commande GET, PUT, POST, PATCH et DELETE.

7. Dispositif de module de sécurité matériel (HSM) mettant en œuvre une application d'authentification de quorum distribué par le biais d'une passerelle API (16), moyennant quoi, lorsqu'un utilisateur accède à une ressource (40) sur le dispositif HSM (10), l'accès de cet utilisateur est appliqué selon un ID de quorum et une période d'expiration de quorum par l'intermédiaire de la passerelle d'interface de programmation d'applications (API) en réponse à une authentification en temps réel d'administrateurs travaillant à distance en cohérence avec l'accès à un secret partagé pour autoriser des opérations HSM nécessitant une approbation simultanée dans la période d'expiration de quorum pour l'ID de quorum, **caractérisé en ce que** le HSM comprend :
une ou plusieurs ressources (40),
une API de gestionnaire de ressources (36) pour accéder à ladite ou auxdites ressources (40),
un module d'application (34) pour appliquer l'accès à ladite ou auxdites ressources par l'intermédiaire de ladite passerelle API (16) selon une politique de quorum (51), et
un gestionnaire de quorum (37) pour générer et stocker une demande de quorum (52) dans une base de données (17), dans lequel dans une étape d'événement de création de quorum (310) :
ledit module d'application (34) demande à une politique de quorum (51) si un quorum est requis pour accéder à ladite ressource (40),
ledit gestionnaire de quorum (37) crée une demande de quorum (52) lorsqu'une opération sur ladite ressource 40 qui requiert une autorisation de quorum est tentée, par :
la génération de la demande de quorum (52) conformément à ladite politique de quorum (51) et le stockage de celle-ci dans une base de données (17) pour l'attacher à ladite ressource (40),
la génération de l'identifiant (ID) de quorum pour l'accès de cet utilisateur sur le HSM à associer à ladite ressource (40) incluse dans la demande de quorum (52),
en réponse à ladite création de ladite demande de quorum (52), ladite API de gestionnaire de ressources (36) informe les administrateurs afin que chacun fournisse un statut d'approbation pour ladite demande de quorum (52) par l'intermédiaire de ladite passerelle API (16), dans une étape d'événement d'approbation de quorum (330) :
en réponse à la réception dudit statut d'approbation à partir desdits administrateurs travaillant en cohérence pour compléter le secret partagé pour lesdites opérations HSM par l'intermédiaire de ladite passerelle d'API (16) dans la période d'expiration de quorum pour l'ID de quorum, ledit gestionnaire de quorum (37) valide le fait que lesdits administrateurs sont autorisés à approuver ladite demande de quorum (52),
si validé, met à jour un décompte de votes sur la demande de quorum (52) dans une base de données (17) ; et
informe ledit utilisateur par l'intermédiaire de ladite passerelle API (16) dudit statut d'approbation, et le module d'application 34 applique un accès à ladite ressource conformément à ladite politique de quorum (51) et à la demande de quorum (52) mise à jour,
dans lequel ladite demande de quorum comporte ledit ID de quorum, un seuil d'approbation, un décompte de votes, la période d'expiration de quorum et un statut d'approbation.

8. HSM selon la revendication 7, dans lequel lors de ladite étape d'événement de création de quorum (310) :
ladite passerelle API (16) envoie un jeton d'accès au gestionnaire de quorum (37) pour valider si l'utilisateur est authentique et existe ;
ledit gestionnaire de quorum (37) valide ledit utilisateur et envoie l'identité d'utilisateur à ladite passerelle API (16), qui vérifie des règles internes pour déterminer à quel micro-service de ladite API de gestionnaire de ressources (36) envoyer la demande de quorum (52) et appeler l'API de gestionnaire de ressources (36) appropriée avec le nom dudit utilisateur.

9. HSM selon la revendication 8, dans lequel
ladite API de gestionnaire de ressources (36) consulte le module d'application (34) pour déterminer si l'utilisateur est autorisé à réaliser l'opération demandée ;
ledit module d'application (34) lit la politique d'autorisation interne à partir de la base de données (17), et détermine à partir de ladite politique de quorum (51) si l'opération requiert un quorum avant qu'une modification de configuration ne soit enregistrée sur ladite ressource ; et
ladite API de gestionnaire de ressources (36) prépare une demande de quorum (52) et envoie la demande au gestionnaire de quorum (37) pour générer une demande de quorum (52) ainsi que des données requises à stocker dans la base de données.

10. HSM selon la revendication 9, dans lequel
ledit gestionnaire de quorum (37) crée ledit identifiant de quorum (53) pour ladite demande de quorum (52) et stocke des données associées à la demande de quorum (52) dans la base de données (17),
ledit gestionnaire de quorum (37) renvoie l'identifiant de quorum (53) généré à l'API de gestionnaire de ressources (36) à l'utilisateur par le biais de la passerelle API (16).

11. HSM selon la revendication 7, dans lequel, lors de l'étape d'événement d'approbation de quorum (340), chaque administrateur vote pour approuver ou refuser une demande de quorum s'il est autorisé, moyennant quoi :
ladite passerelle API (16) demande au HSM d'approuver le quorum avec l'identifiant de quorum (53) et d'autoriser un jeton qui valide l'administrateur ;
ladite passerelle API (16) transfert la demande au module de gestion de quorum (37) pour déterminer si l'utilisateur est autorisé à appeler l'API de ressources (36) et répondre si l'utilisateur est autorisé ou non.

12. HSM selon la revendication 11, dans lequel
ledit gestionnaire de quorum (37) lit les détails de la demande de quorum (52) à partir de la base de données (17), puis consulte le module d'application (34) pour savoir si l'administrateur a l'autorisation d'approuver la demande ;
ledit module d'application (34) lit l'autorisation pour la politique de quorum (51) à partir de la base de données (17) et répond au gestionnaire de quorum, et
si l'administrateur est autorisé, le gestionnaire de quorum (37) augmente un décompte d'approbation de la demande de quorum (52) et stocke ces informations en tant qu'entrée dans la base de données (17), et
répond à l'administrateur par le biais de la passerelle API (16) pour confirmer ou refuser l'approbation de l'utilisateur, dans lequel, une fois qu'une approbation requise a été reçue, l'utilisateur peut appeler l'API de ressources (36) pour appliquer des modifications de configuration sur ledit HSM.

13. HSM selon la revendication 11 comprenant en outre au moins un processeur matériel exécutant des instructions de code de programme informatique à partir d'une mémoire électronique pour exécuter des processus d'au moins un microservice s'exécutant dans un système d'exploitation dudit HSM pour prendre en charge le fonctionnement desdites ressource (40), de l'API de gestionnaire de ressources (36), dudit module d'application (34) et dudit gestionnaire de quorum (37).
